# EUROPÄISCHE PATENTSCHRIFT

(11) **EP 0 974 826 B1**
(45) Veröffentlichungstag und Bekanntmachung des Hinweises auf die Patenterteilung: **21.09.2011**
(21) Anmeldenummer: 99109147.1
(22) Anmeldetag: 08.05.1999
(51) Int. Cl.: G01M 3/02, G01M 3/26

(54) **Verfahren und Vorrichtung zur Erkennung einer Leckage in einem Kraftstoffversorgungssystem einer Brennkraftmaschine**
Method and device for leakage recognition in a fuel supply system of a combustion engine
Méthode et dispositif pour reconnaître une fuite dans un système d'alimentation en combustible d'un moteur à combustion

(30) Priorität: 23.07.1998 DE 19833086
(43) Veröffentlichungstag der Anmeldung: 26.01.2000
(73) Patentinhaber: ROBERT BOSCH GMBH, 70442 Stuttgart (DE)
(72) Erfinder: Kellner, Andreas, 71696 Moeglingen (DE); Hammer, Juergen, 70734 Fellbach (DE)

(56) Entgegenhaltungen:
- EP-A- 0 860 601
- EP-A- 0 900 927
- WO-A-98/55761
- DE-A- 4 233 273
- DE-A- 19 613 184
- DE-A- 19 634 982
- PATENT ABSTRACTS OF JAPAN vol. 1996, no. 07, 31. Juli 1996 (1996-07-31) & JP 08 061133 A (ISUZU MOTORS LTD), 5. März 1996 (1996-03-05)
- PATENT ABSTRACTS OF JAPAN vol. 018, no. 579 (M-1698), 7. November 1994 (1994-11-07) & JP 06 213051 A (NIPPONDENSO CO LTD), 2. August 1994 (1994-08-02)

## Beschreibung

### Stand der Technik

Die Erfindung betrifft ein Verfahren und eine Vorrichtung zur Erkennung einer Leckage in einem Kraftstoffversorgungssystem einer Brennkraftmaschine gemäß den Oberbegriffen der unabhängigen Ansprüche.

Ein Verfahren und eine Vorrichtung zur Erkennung einer Leckage in einem Kraftstoffversorgungssystem einer Brennkraftmaschine sind aus der DE 195 20 300 (US 5 715 786) bekannt. Dort wird in bestimmten Betriebszuständen ein Druckregelventil derart angesteuert, dass der Druck ansteigt. Erfolgt kein Druckanstieg, so wird von einer Leckage ausgegangen.

Bei Systemen, bei denen die Druckregelung mittels einer gesteuerten Hochdruckpumpe erfolgt, ist eine derartige Leckageerkennung nicht ohne weiteres möglich.

Aus der DE 195 13 158 ist ein Verfahren und eine Vorrichtung zur Erkennung einer Leckage in einem Kraftstoffversorgungssystem einer Brennkraftmaschine bekannt. Dort wird in beim Abschalten der Brennkraftmaschine überprüft, ob der Druck wie erwartet abfällt.
Eine Überprüfung erfolgt nur beim Abschalten. Fehler, die im laufenden Betrieb auftreten können nicht erkannt werden.

Ferner zeigt die DE 196 34 982 ein Verfahren zur Überwachung eines Kraftstoffdrucks. Zur Überwachung des Kraftstoffdrucks werden die Ansteuerwerte oder Anteile des Ansteuerwerts, mit denen ein Druckstellglied angesteuert wird, verwendet. Eine Leckage wird erkannt, wenn der Ansteuerwert oder Anteile davon von dem für den Betriebspunkt typischen Wert abweichen.

### Aufgabe der Erfindung

Der Erfindung liegt die Aufgabe zugrunde, ein Verfahren und eine Vorrichtung bereitzustellen, mit denen auch bei Systemen mit gesteuerter Hochdruckpumpe eine sichere Erkennung einer Leckage möglich ist. Diese Aufgabe wird durch die in den unabhängigen Ansprüchen gekennzeichneten Merkmalen gelöst.

### Vorteile der Erfindung

Dadurch, dass zur Erkennung einer Leckage im Schubbetrieb ein Ansteuersignal der Pumpe mit wenigstens einem Schwellwert verglichen wird, und dass eine Leckage erkannt wird, wenn das Ansteuersignal größer als ein Schwellwert ist, ist eine sichere Leckageerkennung möglich. Dabei ist vorteilhaft, dass im Schubbetrieb, die Toleranzwerte, die zur Bildung der Schwellwerte dienen wesentlich kleiner als beim Stand der Technik gewählt werden können. Dadurch kann die Verfügbarkeit der Brennkraftmaschine wesentlich erhöht werden.

Besonders vorteilhaft ist dass keine zusätzlichen Sensoren benötigt werden.

Vorteilhaft ist, dass die Schwellwert ausgehend von dem Druck im Speicher vorgebbar ist, da genauere Schwellwerte vorgebbar sind, und die Sicherheit erhöht wird.

Dadurch, daß bei einer kleinen Leckage ein Notfahrbetrieb erfolgen kann und bei einer großen Leckage eine Abschaltung der Brennkraftmaschine erfolgt, wir die Verfügbarkeit der Brennkraftmaschine erhöht.

Besonders vorteilhaft ist es, daß in einem ersten Zeitabschnitt, der unmittelbar zu Beginn des Schubbetriebs beginnt, überprüft wird, ob das Drucksignal wie erwartet abfällt und/oder daß in einem zweiten Zeitabschnitt, der zeitlich nach dem ersten Zeitabschnitt liegt, das Ansteuersignal mit einem Schwellwert verglichen wird.

Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert. Es zeigen Fig. 1 ein Blockdiagramm eines Kraftstoffeinspritzsystems, Fig. 2 ein Flußdiagramm der erfindungsgemäßen Vorgehensweise und Fig. 3 verschiedene über Zeit aufgetragene Signale.

### Beschreibung der Ausführungsbeispiele

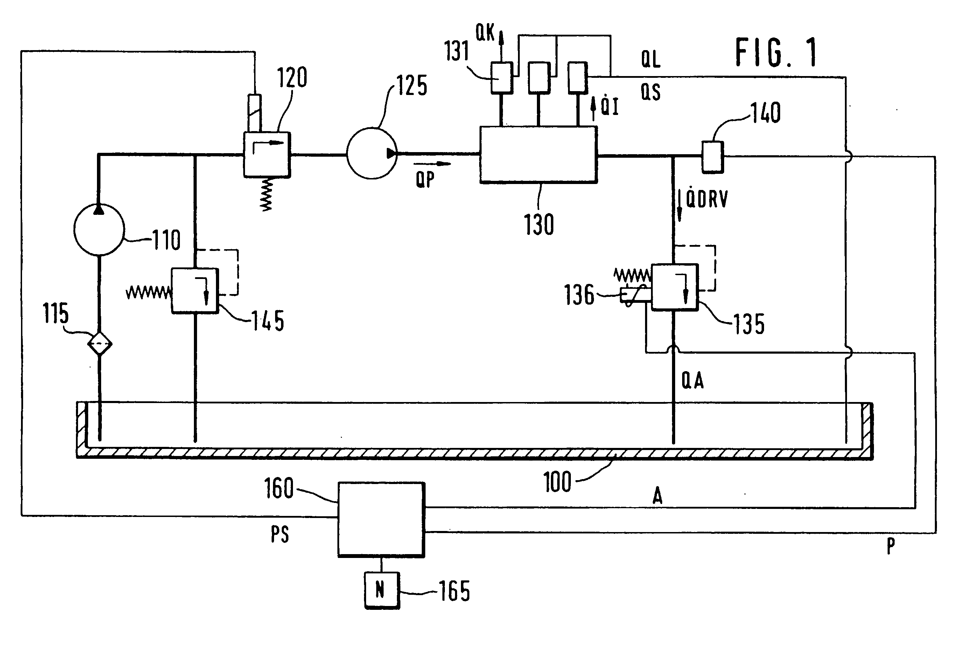

In Figur 1 sind die für das Verständnis der Erfindung erforderlichen Bauteile eines Kraftstoffversorgungssystems einer Brennkraftmaschine mit Hochdruckeinspritzung dargestellt. Das dargestellte System wird üblicherweise als Common-Rail-System bezeichnet.

Mit 100 ist ein Kraftstoffvorratsbehälter bezeichnet. Dieser steht über einen Filter 115, mit einer vorzugsweise mechanischen Vorförderpumpe 110 in Verbindung. Von der Vorförderpumpe 110 gelangt der Kraftstoff über eine Leitung zu einem Zumeßventil 120. Die Verbindungsleitung zwischen der Vorförderpumpe 110 und dem Zumeßventil 120 steht über ein Niederdruckbegrenzungsventil 145 mit dem Vorratsbehälter 100 in Verbindung. Das Ventil 120 steht über eine Hochdruckpumpe 125 mit einem Rail 130 in Verbindung. Das Rail wird auch als Speicher bezeichnet und steht über Kraftstoffleitungen mit verschiedenen Injektoren 131 in Kontakt.

Abhängig von der jeweiligen Ausführungsform des Systems kann das Rail über ein Druckregelventil 135 oder ein Druckablaßventil mit dem Kraftstoffvorratsbehälter 110 verbunden sein. Das Druckregelventil oder das Druckablaßventil 135 ist mittels einer Spule 136 steuerbar.

Von den Injektoren gelangt Kraftstoff über eine Rückleitung ebenfalls zum Tank 100.

Die Leitungen zwischen dem Ausgang der Hochdruckpumpe 125 und dem Eingang der Injektoren 131 und des Druckregelventils 135 werden als Hochdruckbereich bezeichnet. In diesem Bereich steht der Kraftstoff unter hohem Druck. Der Druck im Hochdruckbereich wird mittels eines Sensors 140 erfaßt. Der Sensor 140 liefert ein Drucksignal, das den Druck in dem Speicher charakterisiert. Die Leitungen zwischen dem Tank 100 und der Hochdruckpumpe 125 werden als Niederdruckbereich bezeichnet.

Eine Steuerung 160 beinhaltet einen Druckregler und beaufschlagt entsprechende Stellglieder, wie beispielsweise das Zumeßventil 120 mit einer Stellgröße PS. Ferner kann auch vorgesehen sein, daß der Druckregler die Spule 136 des Druckregelventils oder Druckablaßventils 135, mit einem Ansteuersignal A beaufschlagt. Die Steuerung 160 verarbeitet verschiedene Signale verschiedener Sensoren 165, die den Betriebszustand der Brennkraftmaschine und/oder des Kraftfahrzeugs, daß die Brennkraftmaschine antreibt, charakterisieren. Ein solcher Betriebszustand ist beispielsweise die Drehzahl N der Brennkraftmaschine.

Der Regler ist vorzugsweise als PI-Regler ausgebildet. Es kann auch vorgesehen sein, daß der Regler noch andere Anteile, beispielsweise D-Anteile aufweist.

Die dargestellte Vorrichtung ist nur beispielhaft gewählt. Verschiedene Elemente können auch weggelassen oder an anderer Stelle angeordnet sein. Wesentlich ist, daß der Tank 100 über eine Leitung mit der Vorförderpumpe 110 verbunden ist. Diese steht über eine Leitung mit der Hochdruckpumpe 125 in Verbindung. Die Hochdruckpumpe fördert den Kraftstoff in das Rail, von wo er zu den Injektoren gelangt. Von den Injektoren gelangt eine geringe Menge von Kraftstoff zurück in den Tank.

Diese Einrichtung arbeitet wie folgt: Der Kraftstoff, der sich im Vorratsbehälter befindet, wird von der Vorförderpumpe 110 durch die Filtermittel 115 gesaugt. Ausgangsseitig der Vorförderpumpe 110 ist der Kraftstoff mit einem Druck zwischen 4 bis ca. 6 bar beaufschlagt.

Der Druck im Niederdruckbereich wird durch das Niederdruckbegrenzungsventil 145 eingestellt. Dieses gibt bei zu hohem Druck die Verbindung zwischen dem Ausgang der Vorförderpumpe 110 und dem Vorratsbehälter 100 frei.

Die Hochdruckpumpe 125 verdichtet den Kraftstoff von Niederdruck auf Hochdruck. Die Hochdruckpumpe 125 baut im Rail 130 einen sehr hohen Druck auf. Üblicherweise werden bei Systemen für fremdgezündete Brennkraftmaschinen Druckwerte von etwa 30 bis 100 bar und bei selbstzündenden Brennkraftmaschinen Druckwerte von etwa 1000 bis 2000 bar erzielt. Über die Injektoren 131 kann der Kraftstoff unter hohem Druck den einzelnen Zylinder der Brennkraftmaschine zugemessen werden.

Mittels des Sensors 140 wird der Druck im Rail bzw. im gesamten Hochdruckbereich erfaßt. Mittels der steuerbaren Hochdruckpumpe 125 kann der Druck im Hochdruckbereich geregelt werden. Beispielsweise kann vorgesehen sein, daß die Hochdruckpumpe ein Magnetventil umfaßt, das die geförderte Kraftstoffmenge beeinflußt. Dieses Ventil ist vorzugsweise im Zulauf der Hochdruckpumpe angeordnet. Abhängig von dem Ansteuersignal PS fördert die Hochdruckpumpe Kraftstoffmengen.

Als Vorförderpumpe 110 werden üblicherweise mechanisch angetriebene Zahnradpumpen verwendet. Alternativ können auch elektrische Kraftstoffpumpen zum Einsatz kommen.

Zur Regelung des Druckes P im Hochdruckbereich können zusätzlich weitere Stellglieder eingesetzt werden. Dies sind beispielsweise ein elektrisch verstellbares Druckablaßventil 135 oder ein Druckregelventil 135.

Von der Hochdruckpumpe 125 wird die Fördermenge QP in das Rail 130 gefördert. Vom Rail 130 gelangt die Zumessmenge QI zu den Injektoren 131. Die Menge QI setzt sich zusammen aus der eingespritzten Kraftstoffmenge QK, der Injektorleckagemenge QL und einer Steuermenge QS der Injektoren. Die Injektorleckagemenge QL und die Steuermenge QS gelangen zurück in den Niederdruckbereich. Die eingespritzte Kraftstoffmenge QK gelangt in die Brennräume der Brennkraftmaschine.

Bei offenem Druckregelventil 135 gelangt die Absteuermenge QA zurück in den Tank 100.

Die Injektorleckagemenge QL tritt immer auf und ist vom Betriebszustand abhängig. Die Menge beruht auf unvermeidlichen Undichtigkeiten im Injektor. Die Steuermenge QS nimmt nur bei einer Einspritzung von Kraftstoff Werte größer Null an. Sie dient zur Steuerung der Einspritzung.

Tritt in dem System eine Undichtheit nach außen auf, so handelt es sich um eine äußere Leckage. Schließt einer der Injektoren nicht vollständig, verspätet oder bleibt er ständig geöffnet, so gelangt eine gegenüber der einzuspritzenden Kraftstoffmenge QK erhöhte Kraftstoffmenge in die Brennräume. Dies wird als innere Leckage bezeichnet.

Solche inneren und äußeren Leckagen müssen sicher erkannt werden.

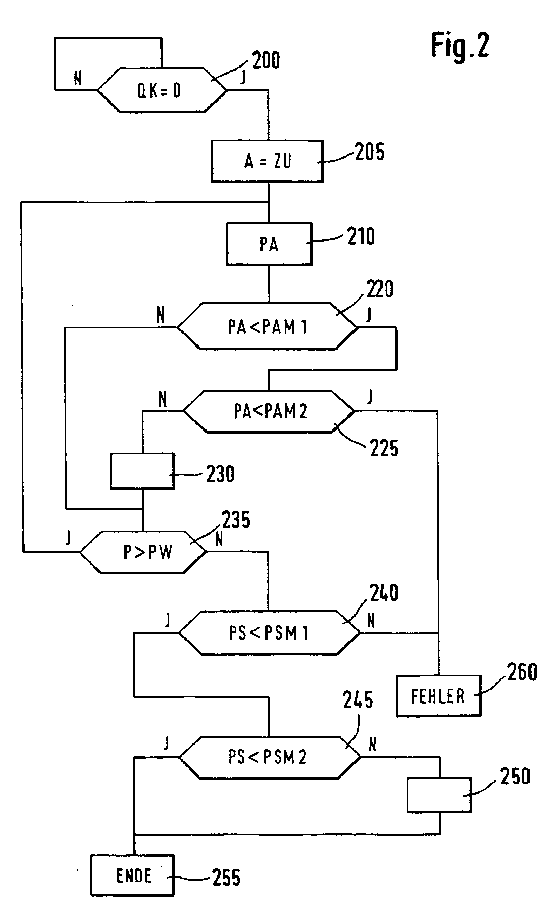

In Fig. 2 ist die Erfindungsgemäße Vorgehensweise anhand eines Flußdiagrammes dargestellt.

Die beschriebene Vorgehensweise basiert im wesentlichen darauf, daß bei dem dargestellten System die Druckregelung über die mengengesteuerte Hochdruckpumpe erfolgt. Ein Druckregelventil oder ein Druckablaßventil 135 kann vorhanden sein, wird aber derart angesteuert, daß es sich in seinem geschlossenen Zustand befindet, so daß die Menge QA zu Null wird. Befindet sich die Brennkraftmaschine im Schubbetrieb, in dem kein Kraftstoff eingespritzt wird, so bedeutet dies, daß die eingespritzte Menge QK und die Steuermenge QS zu Null werden. Lediglich die Leckagemenge QL nimmt einen Wert größer als Null an. Wird in einem solchen Betriebszustand die Hochdruckpumpe derart angesteuert, daß kein Kraftstoff gefördert wird, so erfolgt der Abbau des Druckes im Rail lediglich über die Leckagemenge QL. Die Leckagemenge QL hängt von Betriebszustand der Brennkraftmaschine ab. Im wesentlichen hängt die Leckagemenge von dem Druck P im Speicher 130 und dem Volumen des Speichers ab. Es kann daher als Funktion des Druckes P im Rail 130 ein maximal möglicher Wert PAM für den Druckabbau pro Zeit vorgegeben werden.

Erfindungsgemäß ist vorgesehen, daß beim Übergang in den Schubbetrieb, bei dem kein Kraftstoff eingespritzt wird, der Abfall des Druckes bei nicht angesteuerter Hochdruckpumpe ausgewertet wird. Fällt der Druck schneller, als erwartet ab, wobei der erwartete Wert vom Druck abhängt, so wird auf Leckage erkannt.

Bei einer weiteren Ausgestaltung ist vorgesehen, daß die Stellgröße PS, mit der die Hochdruckpumpe 120 beaufschlagt wird, um den Sollwert des Druckes aufrecht zu erhalten, ausgewertet wird. Übersteigt das Ansteuersignal PS einen vorgegebenen Wert, der der maximal zulässigen Leckagemenge Ql entspricht, so wird ebenfalls auf Leckage erkannt.

Besonders vorteilhaft ist es, wenn die beiden Vorgehensweisen kombiniert werden.

In einem ersten Schritt 200 wird überprüft, ob ein Betriebszustand vorliegt, in dem die Prüfung auf Leckage erfolgen kann. Ein solcher Betriebszustand liegt beispielsweise vor, wenn die einzuspritzende Kraftstoffmenge QK gleich Null ist. Dies ist beispielsweise dann der Fall, wenn sich die Brennkraftmaschine im Schubbetrieb befindet. Besonders vorteilhaft ist es, wenn die Überprüfung in einem Betriebszustand erfolgt, bei dem die Brennkraftmaschine von einem Betriebszustand, bei dem ein hoher Raildruck vorgegeben wird auf einen Betriebszustand übergeht, bei dem ein niederer Raildruck vorgegeben wird, wobei gleichzeitig Übergang auf den niederen Raildruck kein Kraftstoff eingespritzt wird. Dies ist beispielsweise der Fall, wenn sich die Brennkraftmaschine nach einem Beschleunigungsvorgang in den Schubbetrieb übergeht. Liegt ein solcher Betriebszustand nicht vor, erfolgt erneut die Abfrage 200.

Liegt ein entsprechender Betriebszustand vor, so wird in schritt 205 das Ansteuersignal A für das Druckregelventil 135 so vorgegeben, daß dieses schließt. Dieser Schritt ist lediglich dann vorgesehen, wenn die Einrichtung mit einem solchen Druckregelventil ausgestattet ist. Anschließend wird in Schritt 210 die Änderung PA des Raildruckes erfaßt. Hierzu wird beispielsweise das Drucksignal P differenziert.

Die anschließende Abfrage 220 überprüft, ob die Änderung des Druckes PA kleiner als ein erster maximaler Wert PAM1 ist. Der Wert PAM1 ist so gewählt, das er um einen ersten Toleranzwert größer als eine in diesem Betriebspunkt zulässige Druckänderung PAM ist.

Ist dies nicht der Fall, so folgt Schritt 235. Ist die Änderung des Druckes PA kleiner als der erste Wert PAM1, so wird in Schritt 225 überprüft, ob die Änderung des Druckes PA kleiner als ein zweiter maximaler Wert PAM2 ist. Der Wert PAM2 ist so gewählt, das er um einen zweiten Toleranzwert größer als die in diesem Betriebspunkt zulässige Druckänderung PAM ist.

Ist dies der Fall, so wird in Schritt 260 auf Fehler erkannt. Ist die Änderung des Druckes PA kleiner als der erste Wert PAM1 und größer als der zweite Wert PAM2 wird in Schritt 230 auf einen Notbetrieb übergegangen. Anschließend folgt Schritt 235.

Fällt der Druck im Rail schneller ab als erwartet, so wird ein Fehler erkannt. Bei einem ersten Wert wird in einen Notbetrieb übergegangen. Bei einem sehr schnellen Druckabfall erkennt die Einrichtung auf Fehler. Dies hat in der Regel eine Notabschaltung zur Folge. Durch diese Maßnahme kann die Verfügbarkeit der Brennkraftmaschine erhöht werden. Bei einer kleinen Leckage, die nur einen etwas beschleunigten Druckabfall zur Folge hat, geht die Einrichtung in einen Notlauf über. Erst bei größeren Leckagen, die einen sehr schnellen Druckabfall bewirken, erfolgt die Notabschaltung.

Bei der Abfrage 225 und dem Übergang in den Notbetrieb 230 handelt es sich um eine besonders vorteilhafte Ausgestaltung mit der bei kleinen Abweichungen lediglich auf einen Notbetrieb umgeschaltet und bei großen Abweichungen auf Fehler erkannt wird.

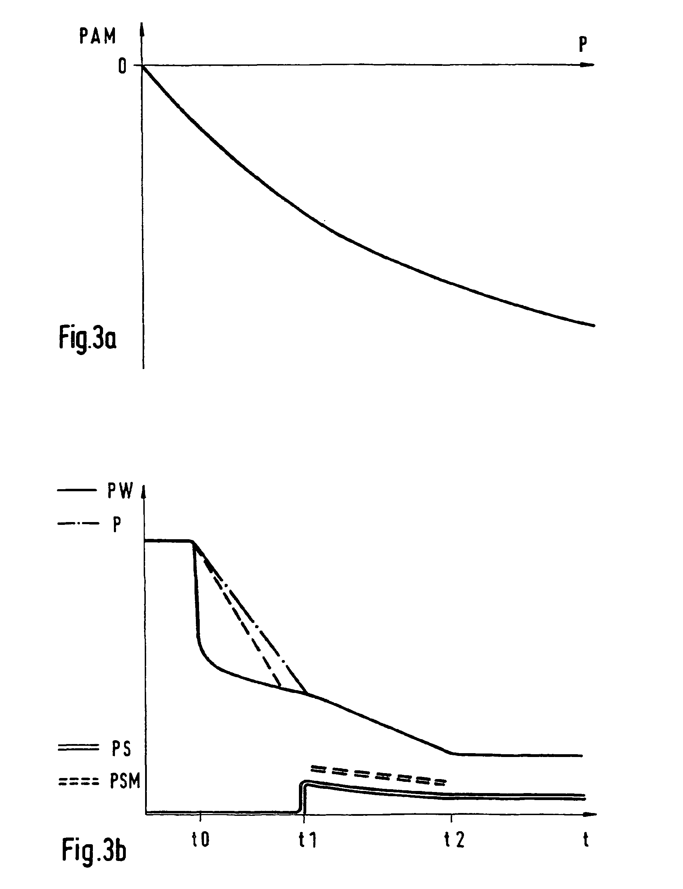

Die in dem Betriebspunkt zulässige Druckänderung PAM wird vorzugsweise aus einem Kennfeld abhängig vom Raildruck P ausgelesen. Ein solches Kennfeld ist in Fig. 3a aufgetragen. Dort ist der maximal zulässige Änderung PAM des Druckes über dem Raildruck aufgetragen. Dieser Figur ist zu entnehmen, daß bei steigendem Druck der Wert für die max. zulässige Änderung PAM des Druckes ansteigt. Dies bedeutet bei höherem Druck ist der Druckabfall steiler als bei niederem Druck. Der Wert PAM1, bei dem auf Notfahrbetrieb umgeschaltet wird, nimmt einen kleineren Wert als der Wert PAM2 an.

Fällt der Druck langsamer ab als ein vorgegebener Wert PAM1, so überprüft die Abfrage 235 ob der Druckwert P größer als ein Sollwert PW ist. Ist dies der Fall, d.h. der Druck ist größer als sein Sollwert, so folgt erneut Schritt 210. Ist der Druck P kleiner oder gleich dem Sollwert PW, so folgt die Abfrage 240.

Hat der Druckwert seinen Sollwert erreicht, so liefert der Druckregler eine Stellgröße PS zur Ansteuerung der Hochdruckpumpe 120. Diese Stellgröße PS ist so bemessen, daß die Hochdruckpumpe 120 so viel Kraftstoff fördert, daß der Druck konstant auf dem Sollwert verbleibt. Im Schubbetrieb bedeutet dies, daß die von der Hochdruckpumpe geförderte Menge entspricht der Leckagemenge QL.

Erfindungsgemäß wird diese Stellgröße PS zur Fehlerüberwachung ausgewertet. Die Abfrage 240 überprüft, ob die Stellgröße PS kleiner als ein maximaler Wert PSM1 ist. Ist dies nicht der Fall, so wird in Schritt 260 auf Fehler erkannt, und die Brennkraftmaschine abgeschaltet. Der Wert PSM1 ist so gewählt, das er um einen ersten Toleranzwert größer als eine in diesem Betriebspunkt zulässige Stellgröße PSM ist.

Erkennt die Abfrage 240 daß die Stellgröße PS kleiner als der Schwellwert PSM1 ist, so überprüft die Abfrage 245 ob die Stellgröße PS kleiner als ein zweiter Schwellwert PSM2 ist. Der Wert PSM2 ist so gewählt, das er um einen zweiten Toleranzwert größer als die in diesem Betriebspunkt zulässige Stellgröße PSM ist. Der zweite Toleranzwert ist größer als der erste Toleranzwert.

Ist dies nicht der Fall, d.h. die Stellgröße PS nimmt Werte zwischen dem ersten und dem zweiten Schwellwert an, so wird in Schritt 250 auf den Notfahrbetrieb übergegangen. Ist die Stellgröße PS kleiner als der zweite Schwellwert PSM2, so wird auf fehlerfreien Zustand erkannt, und das Programm endet in Schritt 255. Die zweite Abfrage 245 mit dem zweiten Schwellwert stellt entsprechend der Abfrage 225 eine besonders vorteilhafte Ausgestaltung dar, die auch weggelassen werden kann.

Vorzugsweise ist der zweite Schwellwert PSM2 kleiner als der erste Schwellwert und zeigt an, daß lediglich eine kleine Leckage vorliegt, bei der lediglich ein Notfahrbetrieb erforderlich ist. Weicht die Stellgröße nur gering von der zulässigen Stellgröße PSM ab, so wird der Notfahrbetrieb eingeleitet. Weicht die Stellgröße PS wesentlich von der zulässigen Stellgröße PSAM ab, so erkennt die Einrichtung auf Fehler und leitet die Notabschaltung der Brennkraftmaschine ein.

Da in die Abschätzung des maximal möglichen Druckabfalls PAM lediglich die Toleranzen der Leckagemenge eingehen, können die Toleranzwerte, die zur Bildung der Schwellwerte dienen, wesentlich kleiner gewählt werden, als bei herkömmlichen Verfahren. Dies bedeutet, die Abweichung zwischen den maximal zulässigen Werten für die Änderung des Druckes und den Schwellwerten sowie die Abweichung zwischen der zulässigen Stellgröße und den Schwellwerten können sehr klein gewählt werden. Diese Toleranzen der Leckagemenge betreffen insbesondere die Streuungen zwischen den einzelnen Injektoren sowie die Änderungen der Leckagemenge über die Lebensdauer und deren Abhängigkeit von der Kraftstofftemperatur.

Durch die Einführung zweier Schwellwerte und die Unterscheidung zwischen einer Abschaltung im Fehlerfall bei einer großen Leckage und einem Notfahrbetrieb bei einer kleinen Leckage kann die Verfügbarkeit der Brennkraftmaschine wesentlich erhöht werden.

In Fig. 3b sind verschiedene Größen über der Zeit t aufgetragen. Mit einer einfachen durchgezogenen Linie ist der Sollwert PW für den Druck im Rail und mit einer strichpunktierten einfachen Linie der reale Druck P im Rail aufgetragen. Mit einer gestrichelten Linie ist der Druck P bei dem maximal zulässigen Druckabfall dargestellt. Mit einer doppelt gezogenen Linie ist das Ansteuersignal für die Hochdruckpumpe und mit einer doppelt gezogenen unterbrochenen Linie der maximal zulässige Wert PSM für das Ansteuersignal aufgetragen.

Bis zu dem Zeitpunkt t0 wird ein hoher Sollwert für den Druck vorgegeben. Zum Zeitpunkt t0 geht die Brennkraftmaschine in den Schubbetrieb über, dies bedeutet, daß der Drucksollwert auf einen niederen Wert abgesenkt wird. Hierzu wird der Druck zuerst sehr schnell auf einen niederen Sollwert abgesenkt und geht dann, verursacht durch die Drehzahlabnahme, langsamer auf niedrigere Sollwerte über. Der tatsächliche Wert, der mit einer strichpunktierten Linie eingezeichnet wird, des Druckes P fällt wesentlich langsamer ab als der Sollwert PW. In diesem Zeitabschnitt steuert die Steuerung 160 die Hochdruckpumpe 120 derart an, daß sie kein Kraftstoff fördert.

Zum Zeitpunkt t1 erreicht der tatsächliche Druck P den Sollwert PW. Ab diesem Zeitpunkt steigt die Stellgröße PS von dem Wert 0 auf einen Wert >0 an. Im dargestellten Beispiel ist der Wert der Stellgröße PS kleiner als der mit einer doppelt gezogenen gestrichelten Linie eingetragene maximale Stellgröße PSM.

Besonders vorteilhaft ist es, wenn anstelle der Druckänderung PA die Zeitdauer zwischen den Zeitpunkten t0 und t1 ausgewertet wird. Dies bedeutet, die Einrichtung erkennt auf Fehler, wenn die Zeitdauer zwischen t0 und t1 kleiner als ein Schwellwert ist.

In einem ersten Zeitabschnitt wird der Druckabfall zur Leckageerkennung ausgewertet. Dieser Zeitabschnitt beginnt zum Zeitpunkt t0 mit dem Übergang in den Schubbetrieb und endet zum Zeitpunkt t1, wenn der Druck seinen Sollwert erreicht hat. In einem zweiten Zeitabschnitt wird zur Leckageerkennung die Stellgröße, mit der die Hochdruckpumpe angesteuert wird, ausgewertet. Dieser zweite Zeitabschnitt beginnt zum Zeitpunkt t1, wenn der Druck seinen Sollwert erreicht und endet zum Zeitpunkt t2. Die Dauer des zweiten Zeitabschnitts endet bei Beenden des Schubbetriebs.

Erfindungsgemäß kann die Überwachung in beiden Zeitabschnitten oder nur in einem der beiden Zeitabschnitte erfolgen.

## Patentansprüche

1. Verfahren zur Erkennung einer Leckage in einem Kraftstoffversorgungssystem einer Brennkraftmaschine, insbesondere einer Brennkraftmaschine mit einem Common Rail System, wobei Kraftstoff von einer steuerbaren Pumpe (125) in einen Speicher gefördert und ein Drucksignal erfasst wird (140), das den Druck in dem Speicher (130) charakterisiert, **dadurch gekennzeichnet, dass** im Schubbetrieb zur Erkennung einer Leckage ein Ansteuersignal der Pumpe mit wenigstens einem Maximalwert verglichen wird und dass eine Leckage erkannt wird, wenn das Ansteuersignal größer als der Maximalwert ist.

2. Verfahren nach Anspruch 1, **dadurch gekennzeichnet, dass** überprüft wird, ob das Drucksignal wie erwartet abfällt und dass eine Leckage erkannt wird, wenn das Drucksignal schneller als ein vorgebbarer Schwellwert abfällt.

3. Verfahren nach einem der vorhergehenden Ansprüche, **dadurch gekennzeichnet, dass** der Schwellwert ausgehend von dem Drucksignal vorgebbar ist.

4. Verfahren nach Anspruch 2, **dadurch gekennzeichnet, dass** bei überschreiten eines ersten Schwellwerts eine kleine Leckage erkannt und ein Notfahrbetrieb eingeleitet wird, und dass bei Überschreiten eines zweiten Schwellwerts eine große Leckage erkannt und eine Abschaltung der Brennkraftmaschine eingeleitet wird.

5. Verfahren nach Anspruch 1, **dadurch gekennzeichnet, dass** bei überschreiten eines ersten Maximalwerts eine kleine Leckage erkannt und ein Notfahrbetrieb eingeleitet wird, und dass bei Überschreiten eines zweiten Maximalwerts eine große Leckage erkannt und eine Abschaltung der Brennkraftmaschine eingeleitet wird.

6. Verfahren nach einem der vorhergehenden Ansprüche, **dadurch gekennzeichnet, dass** in einem ersten Zeitabschnitt, der unmittelbar zu Beginn des Schubbetriebs beginnt, überprüft wird, ob das Drucksignal wie erwartet abfällt.

7. Verfahren nach einem der vorhergehenden Ansprüche, **dadurch gekennzeichnet, dass** in einem zweiten Zeitabschnitt, der zeitlich nach dem ersten Zeitabschnitt liegt, das Ansteuersignal mit einem Schwellwert verglichen wird.

8. Vorrichtung zur Erkennung einer Leckage in einem Kraftstoffversorgungssystem einer Brennkraftmaschine, insbesondere einer Brennkraftmaschine mit einem Common Rail System, wobei eine steuerbare Pumpe (125) ausgebildet ist, Kraftstoff in einen Speicher zu fördern und ein Drucksignal zu erfassen (140), das den Druck in dem Speicher (130) charakterisiert, **dadurch gekennzeichnet, dass** Mittel vorgesehen sind, die zur Erkennung einer Leckage im Schubbetrieb ein Ansteuersignal der Pumpe mit wenigstens einem Schwellwert vergleichen und dass eine Leckage erkannt wird, wenn das Ansteuersignal größer als der Maximalwert ist.

## Claims

1. Method for identifying a leak in a fuel supply system of an internal combustion engine, in particular of an internal combustion engine having a common rail system, with fuel being delivered to a reservoir by a controllable pump (125) and a pressure signal being detected (140), this pressure signal characterizing the pressure in the reservoir (130), **characterized in that** an actuation signal from the pump is compared with at least one maximum value during overrun operation for the purpose of identifying a leak, and **in that** a leak is identified when the actuation signal is greater than the maximum value.

2. Method according to Claim 1, **characterized in that** a check is made to determine whether the pressure signal falls as expected, and **in that** a leak is identified when the pressure signal falls more quickly than a predefinable threshold value.

3. Method according to either of the preceding claims, **characterized in that** the threshold value can be predefined on the basis of the pressure signal.

4. Method according to Claim 2, **characterized in that** a small leak is identified and an emergency driving mode is initiated when a first threshold value is exceeded, and **in that** a large leak is identified and switch-off of the internal combustion engine is initiated when a second threshold value is exceeded.

5. Method according to Claim 1, **characterized in that** a small leak is identified and an emergency driving mode is initiated when a first maximum value is exceeded, and **in that** a large leak is identified and switch-off of the internal combustion engine is initiated when a second maximum value is exceeded.

6. Method according to one of the preceding claims, **characterized in that** a check is made to determine whether the pressure signal falls as expected in a first time period which begins immediately at the beginning of the overrun operation.

7. Method according to one of the preceding claims, **characterized in that** the actuation signal is compared with a threshold value in a second time period which follows the first time period.

8. Apparatus for identifying a leak in a fuel supply system of an internal combustion engine, in particular an internal combustion engine having a common rail system, with a controllable pump (125) being designed to deliver fuel to a reservoir and to detect a pressure signal (140) which characterizes the pressure in the reservoir (130), **characterized in that** means are provided which, for the purpose of identifying a leak during overrun operation, compare an actuating signal from the pump with at least one threshold value, and **in that** a leak is identified when the actuation signal is greater than the maximum value.

## Revendications

1. Procédé pour reconnaître une fuite dans un système d'alimentation en carburant d'un moteur à combustion interne, en particulier d'un moteur à combustion interne avec un système à rampe commune, du carburant étant refoulé depuis une pompe commandable (125) dans un accumulateur et un signal de pression (140) étant détecté, lequel caractérise la pression dans l'accumulateur (130), **caractérisé en ce que** dans un mode de fonctionnement de poussée, pour reconnaître une fuite, un signal de commande de la pompe est comparé à au moins une valeur maximale et **en ce qu'**une fuite est reconnue lorsque le signal de commande est supérieur à la valeur maximale.

2. Procédé selon la revendication 1, **caractérisé en ce que** l'on vérifie si le signal de pression chute comme attendu, et **en ce qu'**une fuite est reconnue lorsque le signal de pression diminue plus rapidement qu'une valeur seuil prédéfinissable.

3. Procédé selon l'une quelconque des revendications précédentes, **caractérisé en ce que** la valeur seuil peut être prédéfinie à partir du signal de pression.

4. Procédé selon la revendication 2, **caractérisé en ce que** dans le cas d'un dépassement d'une première valeur seuil, une petite fuite est reconnue et un mode de conduite d'urgence est amorcé, et **en ce que** dans le cas d'un dépassement d'une deuxième valeur seuil, une grosse fuite est reconnue et une coupure du moteur à combustion interne est amorcée.

5. Procédé selon la revendication 1, **caractérisé en ce que** dans le cas d'un dépassement d'une première valeur maximale, une petite fuite est reconnue et un mode de conduite d'urgence est amorcé, et **en ce que** dans le cas d'un dépassement d'une deuxième valeur maximale, une grosse fuite est reconnue et une coupure du moteur à combustion interne est amorcée.

6. Procédé selon l'une quelconque des revendications précédentes, **caractérisé en ce que** dans un premier intervalle de temps qui commence immédiatement au début du mode de fonctionnement de poussée, on vérifie si le signal de pression chute comme attendu.

7. Procédé selon l'une quelconque des revendications précédentes, **caractérisé en ce que** dans un deuxième intervalle de temps qui suit le premier intervalle de temps, le signal de commande est comparé avec une valeur seuil.

8. Dispositif pour reconnaître une fuite dans un système d'alimentation en carburant d'un moteur à combustion interne, en particulier d'un moteur à combustion interne avec un système à rampe commune, une pompe commandable (125) étant réalisée pour refouler du carburant dans un accumulateur et pour détecter un signal de pression (140) qui caractérise la pression dans l'accumulateur (130), **caractérisé en ce que** des moyens sont prévus, lesquels, pour reconnaître une fuite en mode de fonctionnement de poussée, comparent un signal de commande de la pompe avec au moins une valeur seuil, et **en ce qu'**une fuite est reconnue si le signal de commande est supérieur à la valeur maximale.
